# FASCICULE DE BREVET EUROPEEN

(11) **EP 4 062 041 B1**
(45) Date de publication et mention de la délivrance du brevet: **06.03.2024**
(21) Numéro de dépôt: 20821350.4
(22) Date de dépôt: 20.11.2020
(51) Int. Cl.: F02C 3/16, F02C 7/224, F23R 3/28

(54) **DISPOSITIF D'ALIMENTATION EN CARBURANT D'UNE CHAMBRE DE COMBUSTION D'UN GÉNÉRATEUR DE GAZ**
VORRICHTUNG ZUR BRENNSTOFFZUFUHR ZU EINER BRENNKAMMER EINES GASGENERATORS
DEVICE FOR SUPPLYING FUEL TO A COMBUSTION CHAMBER OF A GAS GENERATOR

(30) Priorité: 22.11.2019 FR 1913112
(43) Date de publication de la demande: 28.09.2022
(73) Titulaire: Safran Helicopter Engines, 64510 Bordes (FR)
(72) Inventeur: DUCHAINE, Patrick, Olivier, 77550 MOISSY-CRAMAYEL (FR); COTTIN, Guillaume, Thierry, 77550 MOISSY-CRAMAYEL (FR)
(74) Mandataire: Ernest Gutmann - Yves Plasseraud S.A.S.
(86) Numéro de dépôt international: PCT/FR2020/052146
(87) Numéro de publication internationale: WO 2021/099752

(56) Documents cités:
- WO-A1-2015/036703
- DE-B- 1 162 136
- US-A- 2 856 755

## Description

### Domaine technique de l'invention

Le domaine est celui des dispositifs d'injection de carburant dans une chambre de combustion d'un moteur pour un aéronef.

### Etat de la technique antérieure

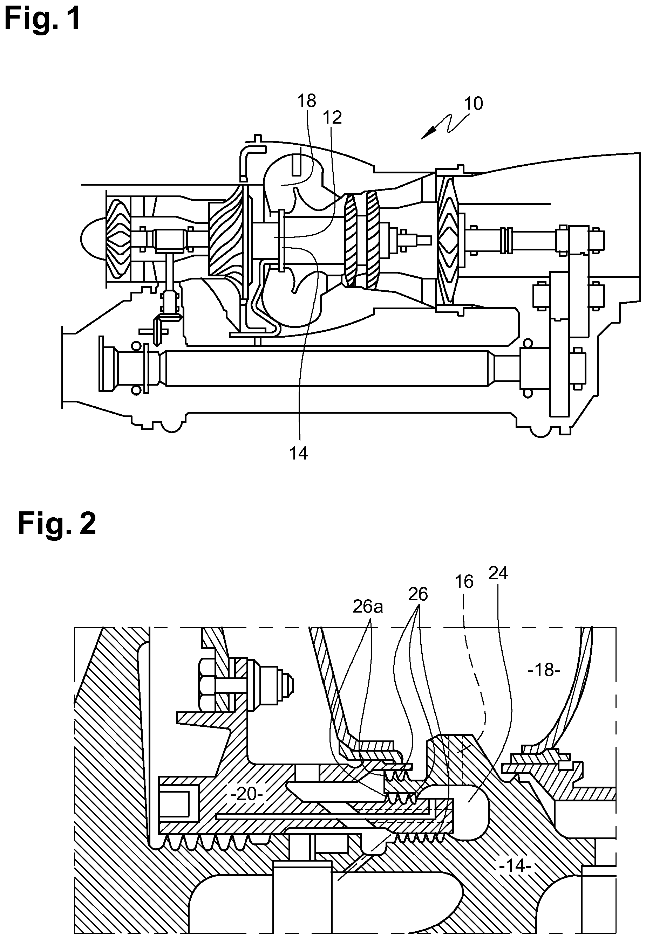

En référence à la figure 1, certaines turbomachines 1, comme par exemple les turbomoteurs, comprennent un générateur de gaz 10 comprenant un arbre rotatif 12 sur lequel est montée une roue d'injection 14, qui est donc elle-même rotative.

La roue d'injection présente une pluralité d'orifices 16 qui débouchent dans une chambre de combustion 18. De cette façon la roue d'injection, lors de sa rotation, pulvérise du carburant par centrifugation dans la chambre de combustion 18. En référence à la figure 2, la turbomachine comprend également une rampe d'alimentation 20 en carburant, qui est une pièce fixe de révolution montée autour de l'arbre 12 du générateur de gaz 10. La rampe d'alimentation 20 achemine du carburant jusqu'à la roue d'injection. Ainsi, la rampe d'alimentation 20 comprend un circuit interne 22 de carburant qui débouche dans une cavité 24 ou chambre annulaire de pulvérisation. Pour assurer l'étanchéité entre la roue d'injection 14 et la rampe d'alimentation 20, une pluralité de joints dynamiques 26 tels que des joints labyrinthes 26 sont prévus. Ce type de joint 26, bien connu de l'état de la technique, comprend des dents annulaires 26a portées par l'une de la rampe d'alimentation 20 et de la roue d'injection 14 et frottant sur une partie annulaire abradable de l'autre de la roue d'injection 14 et de la rampe d'alimentation 20.

Or, il arrive souvent qu'un dépôt solide de coke se forme entre les dents annulaires 26a, entrainant de ce fait l'apparition de frottements entre la roue d'injection 14 et la rampe 20 d'alimentation. Les frottements peuvent s'aggraver jusqu'à entrainer le blocage complet de l'arbre du générateur de gaz ; il n'est alors plus possible de démarrer le moteur.

Dans le cas de difficultés de démarrage, les opérateurs réalisent des opérations de recherche de pannes décrites dans un manuel de maintenance de la turbomachine. Ces recherches sont généralement longues et peu efficaces, puisqu'il faut passer un temps parfois important avant de détecter la cause des difficultés de démarrage, en l'espèce une cokéfaction au niveau des joints dynamiques (en effet, de nombreuses autres causes sont envisageables). Une fois la cause identifiée, il faut procéder soit au nettoyage de la rampe sur moteur, soit au démontage de la rampe pour nettoyage ou remplacement. Ces opérations impliquent une indisponibilité imprévue de la turbomachine, et donc de l'aéronef dans lequel elle est installée, qui peuvent en outre nécessiter d'annuler une ou plusieurs missions de vol prévues. Ces opérations représentent donc un coût important.

On comprend ainsi qu'il est donc important de limiter la formation de coke au niveau des joints annulaires réalisant l'étanchéité entre la roue d'injection et la rampe d'alimentation.

Le document DE1162136B divulgue un dispositif d'alimentation en carburant d'une chambre de combustion d'un générateur de gaz connu dans l'art.

L'invention vise à remédier à ces inconvénients de manière simple, fiable et peu onéreuse.

### Présentation de l'invention

Ainsi, le présent document concerne un dispositif d'alimentation en carburant d'une chambre de combustion d'un générateur de gaz, comprenant :
- une roue d'injection de carburant dans la chambre de combustion,
- une rampe d'alimentation en carburant comprenant un circuit interne de carburant comportant des moyens de sortie de carburant alimentant en carburant une chambre annulaire de pulvérisation formée entre la rampe et la roue d'injection,
- au moins un joint annulaire dynamique d'étanchéité adapté pour assurer une étanchéité entre une face annulaire de la rampe d'alimentation en carburant et la roue d'injection,
caractérisé en ce que le circuit de carburant de la rampe d'alimentation en carburant comprend une partie annulaire de circulation de carburant agencée radialement au niveau du joint annulaire dynamique.

A la différence de la technique antérieure, le circuit de carburant est pourvu d'une partie annulaire qui est agencée au droit du joint annulaire dynamique, ce qui permet d'abaisser la température (typiquement en deçà de 150°C (423 K)) par circulation de carburant au niveau du joint annulaire et ainsi d'éviter la formation de coke. Lorsque le joint comprend des dents annulaires, on évite l'accumulation de coke dans les espaces annulaires formées entre les dents annulaires. Les conditions de fonctionnement nominales de la turbomachine peuvent ainsi être conservées puisque l'on évite tout risque de blocage de l'arbre moteur. Le terme « partie annulaire » ne vise pas une partie formée sur 360° comme cela apparaitra à la lumière de la description détaillée.

Dans une réalisation, ladite partie annulaire comprend au moins une première spire agencée radialement à l'intérieur du joint dynamique et communiquant en aval avec les moyens de sortie de carburant. Cette première spire comprend une extrémité amont reliée un canal amont de carburant et est reliée en aval aux moyens de sortie de carburant.

Egalement, ladite première spire peut être formée au voisinage d'une première extrémité axiale du joint dynamique, ladite première extrémité axiale étant agencée le long du joint à l'opposé d'une seconde extrémité agencée à proximité des moyens de sortie de carburant. Ce positionnement de la première spire permet de refroidir la première extrémité du joint annulaire qui est la partie la plus sujette à la formation de coke.

Par ailleurs, ladite partie annulaire peut comprendre au moins une seconde spire agencée axialement entre la première spire et la seconde extrémité du joint annulaire et succédant dans le sens de l'écoulement d'air à la première spire.

Le joint annulaire peut présenter une étendue axiale L, ladite première spire s'étendant axialement entre -*L*/2 et *L* où l'origine est prise au niveau de la première extrémité axiale du joint et le sens positif est pris de la première extrémité vers la seconde extrémité.

Ladite partie annulaire peut être reliée aux moyens de sortie de carburant qui comprennent une pluralité d'orifices de sortie de carburant dans la chambre de pulvérisation.

Lesdits moyens de sortie de carburant peuvent comprendre un ou plusieurs conduits s'étendant sur la circonférence et reliées en amont à ladite partie annulaire.

La face annulaire de la rampe peut être une face annulaire radialement externe, ladite partie annulaire du circuit de carburant étant agencée radialement à l'intérieur de ladite face annulaire radiale.

Selon une autre caractéristique, ladite partie annulaire de circulation de carburant peut être agencée radialement à l'intérieur ou radialement à l'extérieur du joint annulaire.

Le joint annulaire peut comprendre des dents annulaires espacées axialement les unes des autres, ces dents annulaires étant portées par l'une de la rampe d'alimentation et de la roue d'injection et étant apte à coopérer par frottement sur une partie annulaire abradable de l'autre de la roue d'injection et de la rampe d'alimentation.

Ladite partie annulaire radiale peut être agencée radialement à l'intérieur ou à l'extérieur des dents annulaires.

L'invention concerne aussi une turbomachine comprenant un dispositif tel que décrit ci-dessus.

### Brève description des figures

[Fig. 1] est un schéma général d'une turbomachine équipée d'une roue d'injection « 14 » solidaire de l'axe moteur « 12 » et d'une chambre de combustion annulaire « 18 », et
[Fig. 2] déjà décrites précédemment, représentent de manière schématique le principe de fonctionnement d'une turbine à gaz équipée d'une roue d'injection de carburant,
[Fig. 3] représente une première réalisation selon la présente divulgation, cette figure comprenant deux parties A et B notées respectivement figure 3A et figure 3B présentant respectivement une coupe axiale et une vue externe de la rampe, les flèches illustrant de manière schématique la circulation de carburant,
[Fig. 4] est une représentation 3D d'une variante de la réalisation de la figure 3 (section oblong du circuit carburant),
[Fig. 5] représente une deuxième réalisation selon la présente divulgation, cette figure comprenant deux parties A et B notées respectivement figure 5A et figure 5B, présentant respectivement une coupe axiale (partie A) et une vue externe de la rampe (partie B), les flèches représentant de manière schématique la circulation de carburant,
[Fig. 6] représente une troisième réalisation, présentant une coupe axiale (le rectangle rouge représente de manière schématique une cavité où le carburant peut circuler),
[Fig. 7] représente une quatrième réalisation selon la présente divulgation, cette figure comprenant deux parties A et B notées respectivement figure 7A et figure 7B présentant respectivement une coupe axiale et une vue externe de la rampe, les flèches représentant de manière schématique la circulation de carburant.

### Description détaillée de l'invention

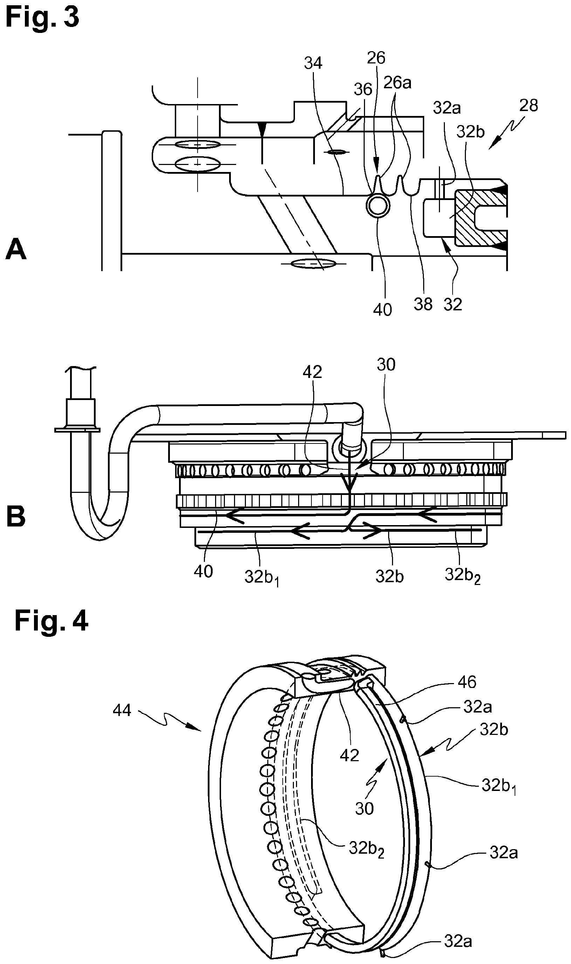

On se réfère maintenant à la figure 3 qui représente une rampe d'alimentation 28 en carburant destinée à coopérer avec une roue d'injection 14 identique ou similaire à celle représentée en figure 2. La rampe d'alimentation 28 en carburant comprend un circuit interne 30 de carburant comportant des moyens de sortie 32 de carburant fournissant du carburant à une chambre de pulvérisation. Le circuit carburant est symbolisé par un trait gras et le sens de circulation par des flèches. Les moyens de sortie 32 de carburant comprennent un conduit annulaire 32b pouvant ne s'étendre sur 360°, ce conduit étant relié à des orifices 32a de sortie de carburant régulièrement espacés les uns des autres autour de l'axe de la turbomachine. Le conduit annulaire 32b comprend un premier conduit 32b1 circonférentiel et un second conduit 32b2 circonférentiel. Le circuit 30 de carburant est illustré de manière schématique sur la figure 3B. La rampe d'alimentation 28 comprend une face annulaire 34 radialement externe depuis laquelle s'étendent des dents ou léchettes annulaires radiales 26a destinées à coopérer avec un anneau réalisé en matériau abradable (non représenté). Le joint dynamique d'étanchéité ainsi formé comprend une première extrémité 36 et une seconde extrémité 38, la seconde extrémité 38 étant agencée à proximité des moyens de sortie 32 de carburant tandis que la première extrémité 36 est située à l'opposé.

Pour éviter une formation de coke au niveau de la première extrémité, le circuit de carburant 30 comprend une partie annulaire 40 qui est formée au droit du joint annulaire 26, c'est-à-dire axialement au niveau du joint annulaire 26 et dans le cas présent radialement à l'intérieur du joint annulaire 26 schématiquement le circuit carburant est représenté avec une section circulaire mais une section oblongue est aussi possible comme illustré en figure 4). Plus spécifiquement, cette partie annulaire 40 est formée par une première spire dont l'extrémité amont est reliée à un canal d'amenée 42 de carburant et dont l'extrémité aval est reliée à la partie annulaire 40 ou première spire. On observe que la liaison entre l'extrémité aval de la première spire 40 et le conduit annulaire 32b s'effectue angulairement sensiblement au milieu de celui-ci pour réduire les pertes de charges dans le conduit annulaire. Cette première spire 40 est formée au voisinage de la première extrémité 36 du joint annulaire 26. Ainsi, les éventuels reflux de carburant depuis la chambre de pulvérisation 24 ne conduisent pas une formation de coke puisque la température au niveau de la dent annulaire 26a de la première extrémité 36 du joint annulaire 26 est réduite par rapport à la technique antérieure.

La figure 4 présente une vue tridimensionnnelle de la rampe d'alimentation 44 selon une variante de la réalisation de celle illustrée en figure 3). Dans cette vue, la première spire 46 présente une dimension axiale ou longitudinale (i.e. une section oblongue et non circulaire), c'est à dire selon l'axe de la turbine à gaz. Ici, le joint annulaire 26 présentant une étendue axiale L, la première spire 46 se situe axialement entre-L/2 et L où l'origine est prise au niveau de la première extrémité axiale 36 du joint 26 et le sens positif est pris de la première extrémité 36 vers la seconde extrémité 38. Cette spire 46 s'étend axialement en amont de la première extrémité 36 du joint 26 et jusqu'à son extrémité aval.

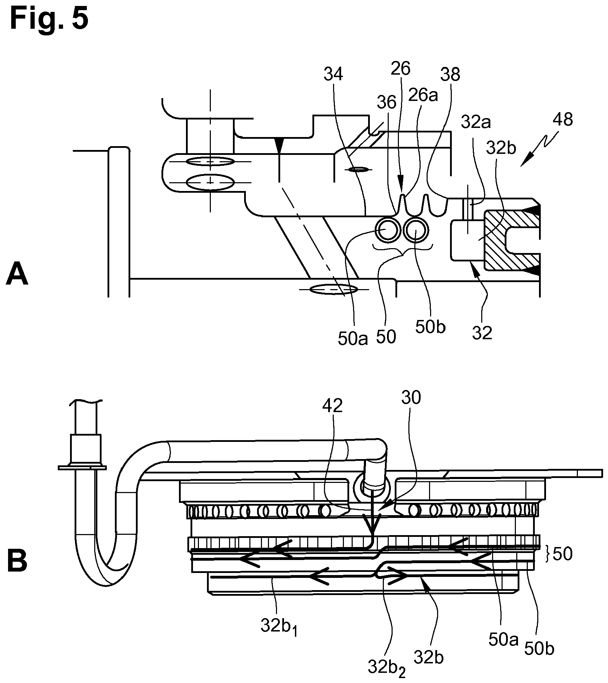

La figure 5A est une deuxième réalisation d'une rampe d'alimentation 48 dans laquelle la partie annulaire 50 comprend une première spire 50a qui est reliée dans le sens de l'écoulement de l'air en aval à une seconde spire 50b, cette seconde spire 50b est formée radialement à l'intérieur du joint annulaire 26. L'extrémité aval de la seconde spire 50b est reliée aux moyens 32 de sortie de carburant. De même que précédemment, la liaison entre l'extrémité aval de la seconde spire 50b et le conduit annulaire 32b s'effectue angulairement sensiblement au milieu de celui-ci pour réduire les pertes de charges dans le conduit.

En fonctionnement, le carburant s'écoule dans la première spire 50a puis dans la seconde spire 50b puis simultanément dans le premier conduit circonférentiel 32b1 et dans le second conduit 32b2 circonférentiel, comme cela est illustré sur la figure 5B. Dans cette deuxième réalisation, on comprend que la première spire 50b1 et la deuxième spire 50b2 forment ensemble la partie annulaire 50 d'écoulement de carburant pour la réduction de la température du joint 26 annulaire dynamique.

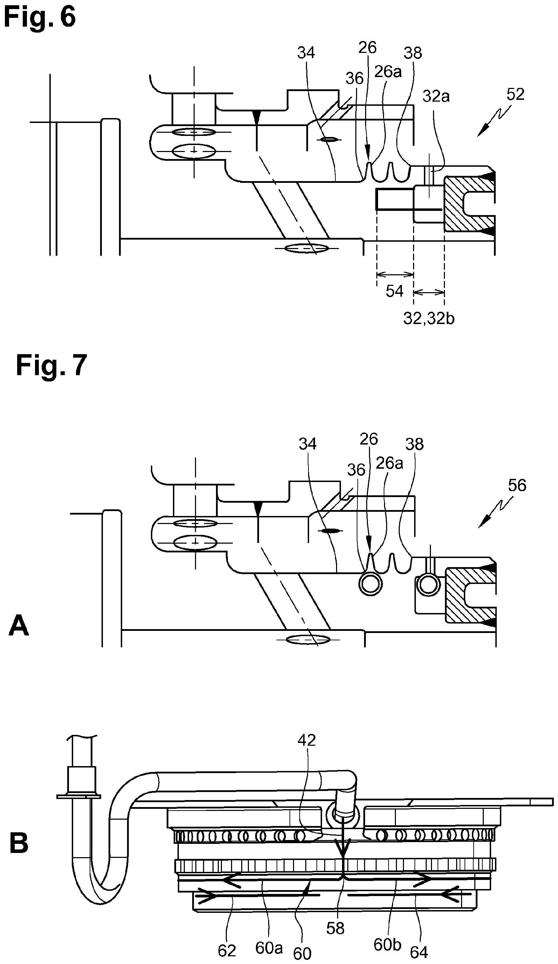

La figure 6 représente une troisième réalisation d'une rampe d'alimentation 52 dans laquelle la partie annulaire 54 de refroidissement du joint annulaire 26 est formée par une extension axiale et radialement à l'intérieur du joint annulaire 26 d'une portion du conduit annulaire 32 de sortie de carburant.

La figure 7 représente une quatrième réalisation d'une rampe d'alimentation 56 dans laquelle l'extrémité aval du canal d'amené 42 est reliée au niveau d'un point milieu 58 d'un conduit annulaire 60 comportant un premier conduit circonférentiel 60a et deuxième conduit circonférentiel 60b qui forme une partie annulaire de refroidissement du joint annulaire 26 en fonctionnement. L'extrémité aval du premier conduit 60a circonférentiel est reliée à un troisième conduit 62 circonférentiel s'étendant sur la circonférence vers le point milieu 58. L'extrémité aval du deuxième conduit 60b circonférentiel est reliée à un quatrième conduit 64 circonférentiel s'étendant sur la circonférence vers le point milieu 58.

On comprend que les extrémités aval des premier 60a et second 60b conduits circonférentiels ne communiquent pas l'un avec l'autre. En fonctionnement, le carburant circule dans le canal d'amené 42 puis se divise en un premier flux de carburant dans le premier conduit 60a circonférentiel puis dans le troisième conduit 62 circonférentiel et en un second flux de carburant qui s'écoule dans le conduit circonférentiel 60b puis dans le quatrième conduit circonférentiel 64.

## Revendications

1. Dispositif d'alimentation en carburant d'une chambre de combustion d'un générateur de gaz, comprenant :
- une roue (14) d'injection de carburant dans la chambre de combustion (18),
- une rampe d'alimentation (20) en carburant comprenant un circuit interne (30) de carburant comportant des moyens de sortie (32) de carburant alimentant en carburant une chambre annulaire (24) de pulvérisation formée entre la rampe (28, 44, 48, 52, 56) et la roue (14) d'injection,
- au moins un joint annulaire (26) dynamique d'étanchéité adapté pour assurer une étanchéité entre une face annulaire (34) de la rampe d'alimentation (28, 44, 48, 52, 56) en carburant et la roue (14) d'injection,
**caractérisé en ce que** le circuit (30) de carburant de la rampe d'alimentation en carburant comprend une partie annulaire (40, 50, 56) de circulation de carburant agencée radialement au niveau du joint annulaire (26) dynamique.

2. Dispositif selon la revendication 1, dans lequel ladite partie annulaire (40, 46) comprend au moins une première spire (40, 46, 50a, 50b) agencée radialement à l'intérieur du joint dynamique (26) et communiquant en aval avec les moyens (32) de sortie de carburant.

3. Dispositif selon la revendication 2, dans lequel ladite première spire (40, 46, 50a) est formée au voisinage d'une première extrémité (36) axiale du joint dynamique, ladite première extrémité axiale étant agencée le long du joint (26) à l'opposé d'une seconde extrémité (38) agencée à proximité des moyens (32) de sortie de carburant.

4. Dispositif selon la revendication 3, dans lequel ladite partie annulaire (50) comprend au moins une seconde spire (50b) agencée axialement entre la première spire (50a) et la seconde extrémité (38) du joint annulaire (26) et succédant fluidiquement à la première spire (50a).

5. Dispositif selon la revendication 3 ou 4, dans lequel le joint annulaire (26) présentant une étendue axiale L, ladite première spire (46) s'étend axialement entre -*L*/2 et *L* où l'origine est prise au niveau de la première extrémité axiale du joint et le sens positif est pris de la première extrémité vers la seconde extrémité.

6. Dispositif selon l'une des revendications 1 à 5, dans lequel ladite partie annulaire est reliée aux moyens (32) de sortie de carburant qui comprennent une pluralité d'orifices (32a) de sortie de carburant dans la chambre de pulvérisation (24).

7. Dispositif selon la revendication 6, dans lequel lesdits moyens (32) de sortie de carburant comprennent un ou plusieurs conduits (32b1, 32b2, 62, 64) s'étendant sur la circonférence et reliées en amont à ladite partie annulaire.

8. Dispositif selon l'une des revendications précédentes, dans lequel la face annulaire (34) de la rampe est une face annulaire radialement externe, ladite partie annulaire du circuit (30) de carburant étant agencée radialement à l'intérieur de ladite face annulaire radiale 34).

9. Dispositif selon l'une des revendications précédentes, dans lequel ladite partie annulaire (40, 46) de circulation de carburant est agencée radialement à l'intérieur ou radialement à l'extérieur du joint annulaire (26).

10. Dispositif selon l'une des revendications 1 à 9, dans lequel le joint annulaire (26) comprend des dents annulaires espacées axialement les unes des autres, ces dents annulaires étant portées par l'une de la rampe d'alimentation (20) et de la roue d'injection (14) et étant apte à coopérer par frottement sur une partie annulaire abradable de l'autre de la roue d'injection (14) et de la rampe d'alimentation (20).

11. Dispositif selon la revendication 10, dans lequel ladite partie annulaire radiale est agencée radialement à l'intérieur ou à l'extérieur des dents annulaires.

12. Turbomachine comprenant un dispositif selon l'une des revendications 1 à 11.

## Patentansprüche

1. Vorrichtung zur Brennstoffzufuhr zu einer Brennkammer eines Gasgenerators, umfassend:
- ein Rad (14) zum Injizieren von Brennstoff in die Brennkammer (18),
- eine Brennstoffzufuhrschiene (20), die einen inneren Brennstoffkreislauf (30) umfasst, der Brennstoffauslassmittel (32) umfasst, die einer ringförmigen Zerstäubungskammer (24), welche zwischen der Schiene (28, 44, 48, 52, 56) und dem Injektionsrad (14) gebildet ist, Brennstoff zuführen,
- mindestens eine dynamische ringförmige Dichtung (26), die geeignet ist, eine Abdichtung zwischen einer ringförmigen Fläche (34) der Brennstoffzufuhrschiene (28, 44, 48, 52, 56) und dem Injektionsrad (14) sicherzustellen,
**dadurch gekennzeichnet, dass** der Brennstoffkreislauf (30) der Brennstoffzufuhrschiene einen ringförmigen Brennstoffzirkulationsteil (40, 50, 56) umfasst, der radial auf Höhe der dynamischen ringförmigen Dichtung (26) angeordnet ist.

2. Vorrichtung nach Anspruch 1, wobei der ringförmige Teil (40, 46) mindestens eine erste Windung (40, 46, 50a, 50b) umfasst, die radial innerhalb der dynamischen Dichtung (26) angeordnet ist und stromabwärts mit den Brennstoffauslassmitteln (32) kommuniziert.

3. Vorrichtung nach Anspruch 2, wobei die erste Windung (40, 46, 50a) in der Nähe eines ersten axialen Endes (36) der dynamischen Dichtung gebildet ist, wobei das erste axiale Ende entlang der Dichtung (26) einem zweiten Ende (38) gegenüberliegend angeordnet ist, das in der Nähe der Brennstoffauslassmittel (32) angeordnet ist.

4. Vorrichtung nach Anspruch 3, wobei der ringförmige Teil (50) mindestens eine zweite Windung (50b) umfasst, die axial zwischen der ersten Windung (50a) und dem zweiten Ende (38) der ringförmigen Dichtung (26) angeordnet ist und strömungstechnisch der ersten Windung (50a) folgt.

5. Vorrichtung nach Anspruch 3 oder 4, wobei die ringförmige Dichtung (26) eine axiale Erstreckung L aufweist, die erste Windung (46) sich axial zwischen -L/2 und L erstreckt, wobei der Ursprung auf Höhe des ersten axialen Endes der Dichtung genommen wird und die positive Richtung vom ersten Ende zum zweiten Ende genommen wird.

6. Vorrichtung nach einem der Ansprüche 1 bis 5, wobei der ringförmige Teil mit den Brennstoffauslassmitteln (32) verbunden ist, die eine Vielzahl von Brennstoffauslassöffnungen (32a) in die Zerstäubungskammer (24) umfassen.

7. Vorrichtung nach Anspruch 6, wobei die Brennstoffauslassmittel (32) eine oder mehrere Leitungen (32b1, 32b2, 62, 64) umfassen, die sich am Umfang erstrecken und stromaufwärts mit dem ringförmigen Teil verbunden sind.

8. Vorrichtung nach einem der vorstehenden Ansprüche, wobei die ringförmige Fläche (34) der Schiene eine radial äußere ringförmige Fläche ist, wobei der ringförmige Teil des Brennstoffkreislaufs (30) radial innerhalb der radialen ringförmigen Fläche (34) angeordnet ist.

9. Vorrichtung nach einem der vorstehenden Ansprüche, wobei der ringförmige Brennstoffzirkulationsteil (40, 46) radial innerhalb oder radial außerhalb der ringförmigen Dichtung (26) angeordnet ist.

10. Vorrichtung nach einem der Ansprüche 1 bis 9, wobei die ringförmige Dichtung (26) axial voneinander beabstandete ringförmige Zähne umfasst, wobei diese ringförmigen Zähne von einem der Zufuhrschiene (20) und des Injektionsrads (14) getragen werden und in der Lage sind, reibschlüssig mit einem abreibbaren ringförmigen Teil des anderen des Injektionsrads (14) und der Zufuhrschiene (20) zusammenzuwirken.

11. Vorrichtung nach Anspruch 10, wobei der radiale ringförmige Teil radial innerhalb oder außerhalb der ringförmigen Zähne angeordnet ist.

12. Turbomaschine, die eine Vorrichtung nach einem der Ansprüche 1 bis 11 umfasst.

## Claims

1. Device for supplying fuel to a combustion chamber of a gas generator, comprising:
- a wheel (14) for injecting fuel into the combustion chamber (18),
- a fuel supply rail (20) comprising an internal fuel circuit (30) including fuel outlet means (32) supplying fuel to an annular spray chamber (24) formed between the rail (28, 44, 48, 52, 56) and the injection wheel (14),
- at least one dynamic annular seal (26) designed to provide a seal between an annular face (34) of the fuel supply rail (28, 44, 48, 52, 56) and the injection wheel (14),
**characterised in that** the fuel circuit (30) of the fuel supply rail comprises an annular fuel flow portion (40, 50, 56) arranged radially in the dynamic annular seal (26).

2. Device according to claim 1, wherein said annular portion (40, 46) comprises at least one first turn (40, 46, 50a, 50b) arranged radially inside the dynamic seal (26) and communicating downstream with the fuel outlet means (32).

3. Device according to claim 2, wherein said first turn (40, 46, 50a) is formed in the vicinity of a first axial end (36) of the dynamic seal, said first axial end being arranged along the seal (26) opposite a second end (38) arranged in the vicinity of the fuel outlet means (32).

4. Device according to claim 3, wherein said annular portion (50) comprises at least one second turn (50b) arranged axially between the first turn (50a) and the second end (38) of the annular seal (26) and fluidly following the first turn (50a).

5. Device according to claim 3 or 4, wherein the annular seal (26) having an axial extent L, said first turn (46) extends axially between -Z/2 and L where the origin is taken at the first axial end of the seal and the positive direction is taken from the first end towards the second end.

6. Device according to one of claims 1 to 5, wherein said annular portion is connected to the fuel outlet means (32) that comprise a plurality of fuel outlet ports (32a) in the spray chamber (24).

7. Device according to claim 6, wherein said fuel outlet means (32) comprise one or more circumferentially extending ducts (32b1, 32b2, 62, 64) connected upstream to said annular portion.

8. Device according to one of the preceding claims, wherein the annular face (34) of the rail is a radially outer annular face, said annular portion of the fuel circuit (30) being arranged radially inside said radial annular face (34).

9. Device according to one of the preceding claims, wherein said annular fuel flow portion (40, 46) is arranged radially inside or radially outside the annular seal (26).

10. Device according to one of claims 1 to 9, wherein the annular seal (26) comprises annular teeth axially spaced from one another, these annular teeth being carried by one of the fuel supply rail (20) and of the injection wheel (14) and being capable of frictionally engaging on an abradable annular portion of the other injection wheel (14) and of the supply rail (20).

11. Device according to claim 10, wherein said radial annular portion is arranged radially inside or outside the annular teeth.

12. Turbine engine comprising a device according to one of claims 1 to 11.
